Europäisches Patentamt

European Patent Office

Office européen des brevets

(19)

(11) Publication number: **0 024 433**
**B1**

(12) **EUROPEAN PATENT SPECIFICATION**

(45) Date of publication of patent specification: **27.07.83**

(51) Int. Cl.³: **B 25 J 17/00**

(21) Application number: **79900310.8**

(22) Date of filing: **22.02.79**

(86) International application number:
**PCT/JP79/00043**

(87) International publication number:
**WO 80/01774 04.09.80 Gazette 80/20**

(54) **ARM WITH GRAVITY-BALANCING FUNCTION.**

(43) Date of publication of application:
**11.03.81 Bulletin 81/10**

(45) Publication of the grant of the patent:
**27.07.83 Bulletin 83/30**

(84) Designated Contracting States:
**DE FR GB**

(56) References cited:
**FR - A - 2 086 976**
**JP - A - 50 111 761**
**JP - A - 52 041 348**
**US - A - 3 608 743**

(73) Proprietor: **KOBE STEEL LIMITED**
**3-18, Wakinohama-Cho 1-Chome**
**Fukiai-Ku Kobe-Shi Hyogo-Ken (JP)**

(72) Inventor: **TSUDA, Goro**
**6-14, 5-chome, Seiryodai**
**Tarumi-Ku, Kobe-Shi Hyogo 655 (JP)**
Inventor: **MIZUGUCHI, Osamu**
**9-18, Higashimachi 1-chome, Sakuragaoka**
**Tarumi-ku, Kobe-shi, Hyogo-ken, 673-02 (JP)**

(74) Representative: **Wright, Hugh Ronald**
**Brookes & Martin 52/54 High Holborn**
**London WC1V 6SE (GB)**

Courier Press, Leamington Spa, England.

Arm with gravity-balancing function

This invention relates to a counterbalanced arm assembly especially for use in the teaching robots—which repeat a movement of the arm assembly caused by a manual operation during the teaching operation.

It is conventional in the art of robots for welding or the like to previously store the trajectories of desired movements in a memory unit by the use of a manual teaching operation. It is of course desirable that the manual movement of the arms of the robots (which may move in many directions) during this teaching operation requires a minimum of force regardless of the direction of the movements.

The arms of robots are generally of considerable weight so that they are easier to move downwardly than upwardly. Accordingly, the arms are often moved unevenly during the manual teaching operation, thus reducing the accuracy of reproduction of a movement by a servo control system. An example of an arm assembly for use in industrial robots is disclosed in Japanese Patent Application No. JP—A—50 111 716 and an example of a linkage is illustrated in French Patent Specification 2086976 but these are unsatisfactory both theoretically and structurally with respect to their performance.

According to the present invention there is provided a counter balance arm apparatus including an arm pivotally mounted about a fulcrum, a spring means, a rotary sheave mounted above the fulcrum of the arm, and a wire extending between an action point on said arm connected to the spring means, the spring means including a spring to thereby counterbalance the weight of the arm, the wire extending between a plurality of sheaves, characterised in that at least one, movable sheave is connected through said spring to a fixed point and at least one other of said sheaves is connected to another fixed point so that movement of the action point at the arm is translated into a smaller expansion or contraction of said spring.

Figure 1 is a diagram for explanation of the operating principles of an arm assembly according to the present invention,

Figure 2 is a skeleton diagram of an arm assembly according to the present invention,

Figure 3 is a skeleton diagram of an arm assembly according to an alternative embodiment of the present invention,

Figure 4 is a front view of an example of an articulation apparatus according to the present invention with a part thereof omitted, and

Figure 5 is a plan view of the example of the articulation apparatus of Figure 4 with a part thereof omitted.

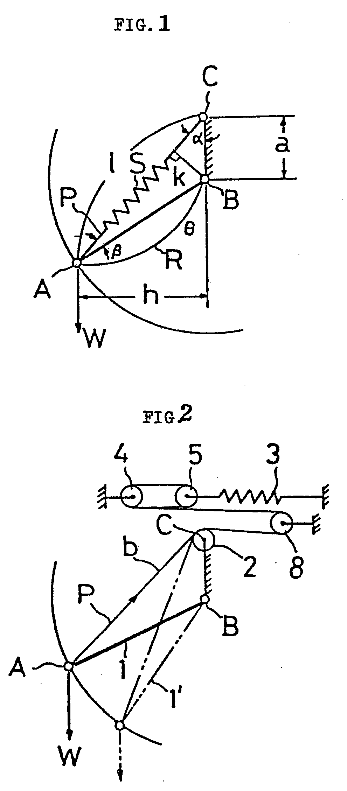

Referring first to Figure 1 there is shown a basic arrangement for counterbalancing the weight of an arm. The moment produced on the arm about a fulcrum B is represented by the following equation:

downward     $W \times h$
upward        $P \times K$

where $\overline{AB}$ is the arm pivoted about the fixed fulcrum B, S is a spring extending between another point C spaced a small distance in a vertical direction above the fulcrum B and point A on the centre of gravity of the arm $\overline{AB}$, W is the weight of the arm AB at the action point A on the centre of gravity, P is the tension of the spring S, K is the length of a perpendicular extending from the line $\overline{AC}$ to the fulcrum B and h is the length of a perpendicular extending from the line $\overline{BC}$ to the point A.

It is evident that the balance condition is as follows:

$$W \times h = P \times K \qquad (1)$$

The area of the triangle ABC is:

$$\tfrac{1}{2}\, a \times h = \tfrac{1}{2}\, l \times K \qquad (2)$$

wherein l is the length of the spring.

Combining equation (1) and (2) to make the ratio therebetween,

$$\frac{W \times h}{a \times h} = \frac{P \times K}{l \times K}$$

Thus,

$$\frac{W}{A} = \frac{P}{l} = \text{constant} \qquad (3)$$

Assuming that the spring tension (P) is proportional to the spring length (l), the link spring mechanism counterbalances the arm wherever it stands in a circumference A spring whose spring constant meets the above requirements must have a free length of zero and such a spring does not, of course, exist. For this reason, the simple arrangement of Figure 1 as discussed above is not possible and cannot exist as a practical device to produce the desired result.

In this connection nor does the arm disclosed in unexamined Patent publication No. 27158/1977 exhibit a satisfactory counterbalancing performance. In other words, in the arm shown in unexamined Patent publication No. 27159/1977, a balance mechanism is suspended at a position corresponding to l in a straight line fashion so that its free length is more than zero.

The present invention provides a spring mechanism which is capable of substantially satisfying the essential conditions as discussed above. As schematically illustrated in Figure 2, the spring mechanism generally comprises an arm rockingly movable in a vertical direction, a rotary sheave 2 pivoted about position C above the fulcrum B of the arm 1, a set of sheaves including one or more fixed rotary sheaves 4 and a moving sheave 5 slidable in a horizontal direction, (i.e. a "block and tackle") a spring member 3 extending between the moving sheave 5 and a fixed member and a wire 6 extending from point A on the centre of gravity of the arm 1 through the rotary sheave 2 and the block and tackle. Thus movement of the point A on the arm 1 is translated in a smaller contraction or expansion of the spring member 3 by the sheaves 4 and 5.

In the above link spring mechanism the rotary sheave 2 acts as a support for the wire 6 but its position is displaced by its radius with respect to the point C of Figure 1. Though this displacement causes an error in the fundamental conditions explained with respect to Figure 1, means is provided for offsetting this error as described hereinafter.

An appropriate spring constant of the link spring mechanism is necessary as follows:

$$q = \frac{W}{a} N^2$$

wherein q is the spring constant of the spring member 3 and N is the number of times the wire 6 extends between sheaves 4 and 5.

It is possible to counterbalance the fixed weight and gravity of the link spring mechanism regardless of the inclination of the arm 1 by proper selection of the spring constant of the spring member 3 and the number of the sheaves in the block and tackle, which selection permits the link spring mechanism to bear the spring constant

$$\frac{W}{a} N^2.$$

Reverting to Figure 1, the conditions for counterbalancing gravity can be represented by the following equations:

$$W \cdot R \sin \theta = P \cdot K$$

On the other hand,

$$K = R \sin \beta \text{ and } l \sin \beta = a \sin \theta$$

Thus,

$$K = R \cdot \frac{a}{l} \sin \theta$$

$$W \cdot R \sin \theta = R \cdot P \frac{a}{l} \sin \theta$$

$$P = \frac{Wl}{a}$$

Accordingly, P balances against W.

It has been previously noted that the rotary sheave 2 can cause an error in the counterbalancing due to its radius. The following sets forth an effective measure to overcome such error.

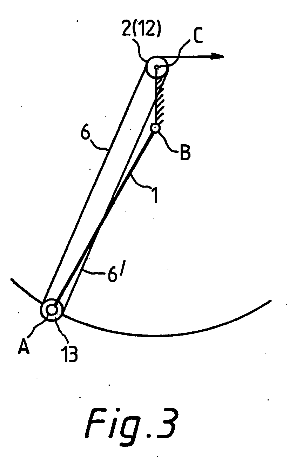

In Figure 3, a fixed sheave 12 having a diameter equal to that of the rotary sheave 2 is disposed coaxially with the rotary sheave 2 while a rotary sheave 13 with a diameter equal to or approximately equal to that of the rotary sheave 2 is pivoted about a point on the centre of gravity A of the arm 1.

The wire 6 is fixedly secured at its one and to the fixed sheave 12 and passes over the rotary sheave 13, over the rotary sheave 2 and over the block and tackle which includes the rotary and moving sheaves 4 and 5 (not shown in Figure 3 but as shown in Figure 2).

The wire 6 extending from the fixed sheave 12 to the rotary sheave 2 through the rotary sheave 13 takes the form of two separate generally parallel lines 6 and 6', and do not cross.

With such an arrangement, the tensions of the two lines 6 and 6' act equally on opposite bisections of a working line extending between point A of Figure 1 or the axis of the rotary sheave 13 and point B of Figure 1 or the axis of the rotary sheaves 2 and 12 so that the combined tension acts as if it passes between two points A and C, thus keeping well-balanced state as expected in the theoretical calculations.

It is to be understood that the force and movements of the wire 6 exerted on the block and tackle through the rotary sheave 2 are reduced to half and amplified twice, respectively, as compared with the previously discussed case of Figure 1. To this end it is required to modify the spring constant of the spring 3 and the number of the sheaves in the block and tackle.

Although it is most desirable to mount both the rotary sheave 2 and the fixed sheave 12 perpendicularly above the axis of the fulcrum B of the arm 1, it is not necessary to mount them accurately perpendicularly above the fulcrum B. If they are both slightly spaced away from the perpendicular, the primary object is fully accomplished without any adverse effect.

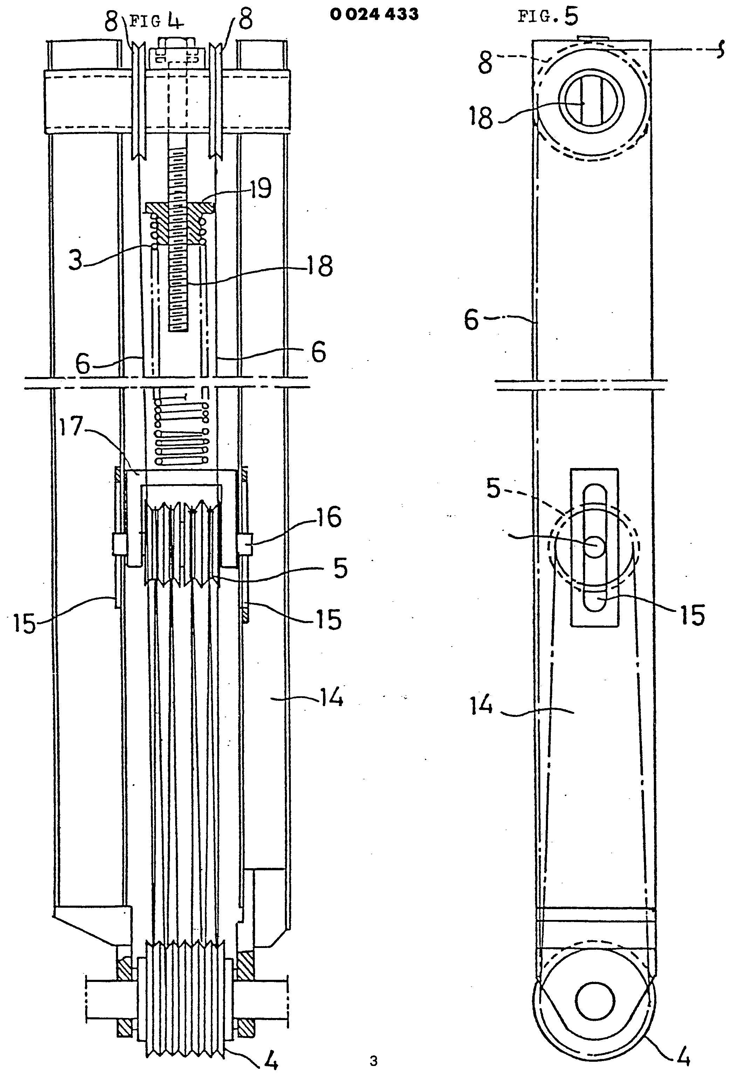

The basic structures of the gravity-balancing mechanism embodying the present invention have been shown and described in Figures 2 and 3. Figures 4 and 5 depict an example of a unitary and compact arrangement which includes the block and tackle consisting of the rotary sheaves 4 and 8 and the spring member 3. In particular, the rotary sheaves 4 and 8 are respectively pivoted about rotatable parallel shifts at the opposite ends of a framework 14 and the moving sheave 5 is journaled on a bridging shaft 16 slidably mounted in longitudinal slots 15 and 15 formed in an intermediate portion of the framework 14. Between a bearing 17 holding the shaft 16 and a boss 19 engaging with a threaded rod 18 there is suspended the spring member 3.

The above illustrated assembly is very practical. The spring tension may be adjusted when the threaded rod 18 is turned clockwise or anticlockwise.

As noted earlier, the present invention permits the block and tackle mechanism including the spring member 3 which extends upwardly along or about the perpendicular with respect to the bottom fulcrum B of the arm 1 to operate on the wire 6 extending on or about the centre of gravity of the arm 1 so as to cancel the turning moment in the direction of gravity, so as to simply provide counterbalanced movement and stopping of the arm at any desired position regardless of the vertical swinging movement of the arm.

In addition, since the rotary sheave 2 and the fixed sheave 12 both have the same diameter and are coaxially disposed and since the wire 6 extends between the aligned rotary and fixed sheaves 2 and 12 and the rotary sheave 13 secured at the working point of the arm in the form of two opposed parallel wires, the force produced by the wire 6 operates without causing a turning moment. This means that the intended gravity counterbalancing performance and thus stability of operation is ensured.

As stated above, the arm assembly with the counterbalancing function as taught by the present invention allows smooth manual balanced movements independent of gravity and the vertical movements of the arm.

This assembly has significant advantages in allowing a manual teaching operation to be simple and enhancing the accuracy of reproduction by a servo control system and is suitable for use in a wide variety of industrial robots and automatic devices.

## Claims

1. A counterbalance arm apparatus including an arm (1) pivotally mounted about a fulcrum (B), a spring means (3), a rotary sheave (2) mounted above the fulcrum of the arm, and a wire (6) extending between an action point (A) on said arm (1) connected to the spring means (3), the spring means (3) including a spring (3) to thereby counterbalance the weight of the arm (1), the wire (6) extending between a plurality of sheaves (4, 5), characterised in that at least one movable sheave (5) is connected through said spring (3) to a fixed point and at least one other of said sheaves (4) is connected to another fixed point so that movement of the action point (A) at the arm (1) is translated into a smaller expansion or contraction of said spring (3).

2. A counterbalance arm apparatus as claimed in Claim 1 characterised in that there is provided a framework (14) in which is mounted the spring means (3), and the sheaves (4, 5) in parallel relationship.

## Revendications

1. Dispositif à bras de compensation comprenant un bras (1) monté pivotant autour d'un axe de rotation (B), des moyens élastiques (3), une poulie de renvoi (2) montée à rotation autour de l'axe de rotation du bras, un câble (6) s'tendant autour d'un point d'action (A) sur ledit bras (1), relié aux moyens élastiques (3), les moyens élastiques comprenant un ressort (3) destiné à compenser le poids du bras (1), le câble (6) se poursuivant autour de plusieurs poulies (4, 5), caractérisé en ce qu'au moins une poulie mobile (5) est reliée à travers ledit ressort (3) à un point fixe et en ce qu'au moins l'une des autres poulies (4) est reliée à un autre point fixe de manière que le mouvement du point d'action (A) sur le bras (1) soit transposé en une plus petite extension ou compression dudit ressort (3).

2. Dispositif à bras de compensation selon la revendication 1 caractérisé en ce que les moyens élastiques (3) sont montés dans un montant (14) dans lequel les poulies (4, 5) sont maintenues en alignement.

## Patentansprüche

1. Gewichtsausgeglichene Armvorrichtung mit einem drehbar um ein Drehgelenk (B) angebrachten Arm (1), einer Federeinrichtung (3), einer über dem Drehgelenk des Arms angebrachten Drehrolle (2), und mit einem Draht (6), der sich von einem Wirkpunkt (A) auf dem Arm (1) aus erstreckt und mit der Federeinrichtung verbunden ist, die eine Feder (3) zum Gewichtsausgleich des Arms umfaßt, wobei sich der Draht (6) zwischen einer Vielzahl von Rollen (4, 5) erstreckt, dadurch gekennzeichnet, daß zumindest eine bewegliche Rolle (5) über die Feder (3) mit einem festen Punkt verbunden ist und mindestens eine andere Rolle (4) mit einem anderen festen Punkt so verbunden ist, daß die Bewegung des Wirkpunkts (A) auf dem Arm (1) in eine kleinere Ausdehnung oder Kontraktion der Feder (3) übersetzt wird.

2. Gewichtsausgeglichene Armvorrichtung nach Anspruch 1, dadurch gekennzeichnet, daß ein Rahmen (14) vorgesehen ist, in welchem die Federeinrichtung (3) sowie die Rollen (4, 5) in paralleler Beziehung angebracht sind.

FIG. 1

FIG 2

Fig.3

FIG 4

FIG.5

3